# EUROPEAN PATENT SPECIFICATION

(11) **EP 2 419 669 B1**
(45) Date of publication and mention of the grant of the patent: **20.08.2014**
(21) Application number: 10714811.6
(22) Date of filing: 16.04.2010
(51) Int. Cl.: F16L 27/08

(54) **HOSE REEL SWIVEL**
SCHLAUCHTROMMELDREHLAGER
PIVOT DE DÉVIDOIR DE TUYAU

(30) Priority: 16.04.2009 US 169994 P
(43) Date of publication of application: 22.02.2012
(73) Proprietor: Graco Minnesota Inc., Minneapolis, MN 55413-1894 (US)
(72) Inventor: HINES, Bradley, H., Andover Minnesota 55304 (US); MATTSON, Barry, W., Elk River Minnesota 55330 (US); BECKER, Steven, D., Blaine Minnesota 55449 (US)
(74) Representative: Cloughley, Peter Andrew
(86) International application number: PCT/US2010/031390
(87) International publication number: WO 2010/126725

(56) References cited:
- DE-A1-102006 061 330
- US-A- 5 671 656
- US-A- 6 086 112
- US-B1- 6 212 997

## Description

### TECHNICAL FIELD

The present invention relates to a fluid swivel.

### BACKGROUND ART

Existing swivels use o-rings or a stack of multiple leather v-packings.

Laid-open German patent application DE 10 2006 061 330 discloses a fluid swivel according to the preamble of claim 1. The swivel bearing may be composed of PTFE.

US 5,671,656 describes a paint pump fluid section, in which a seal between the piston and the housing is composed of UHMWPE.

US 6,086,112 discloses a fluid swivel having the features set forth in the preamble of claim 1.

### DISCLOSURE OF THE INVENTION

The swivel consists of the following: (1) a hardened stainless steel shaft that fluid flows through and the swivel housing rotates around; (2) a carbon steel with zinc plated swivel housing contains the seals and an outlet fitting; (3) a UHMWPE with fluorocarbon o-ring energized seals; (4) threaded brass retainers support the seals and provide a bushing against the shaft; and (5) a retaining clip on end of the shaft.

The hose reel swivel uses o-ring energized UHMWPE seals that last longer than prior art o-ring swivels. It also has larger flow passages for high viscosity fluids. It also has less parts than V-packing swivels.

These features and other objects and advantages of the invention will appear more fully from the following description made in conjunction with the accompanying drawings wherein like reference characters refer to the same or similar parts throughout the several views.

### BRIEF DESCRIPTION OF DRAWINGS

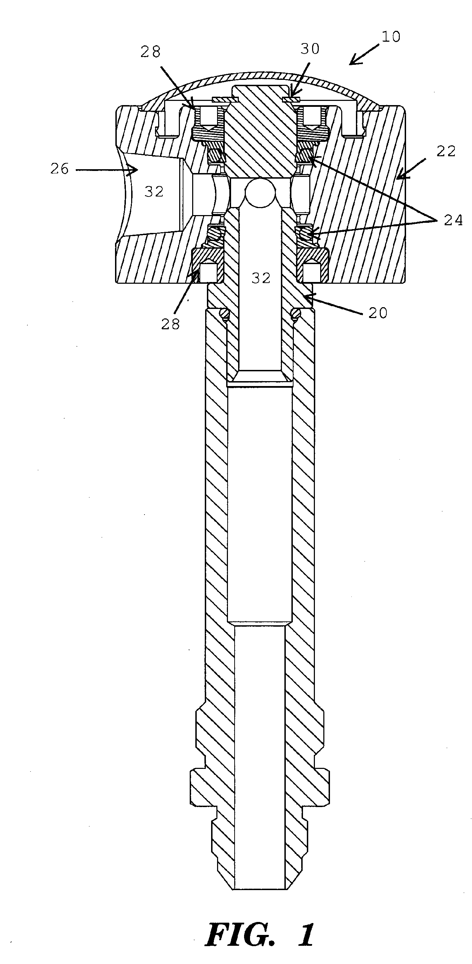

Figure 1 shows a cross-section of the swivel.

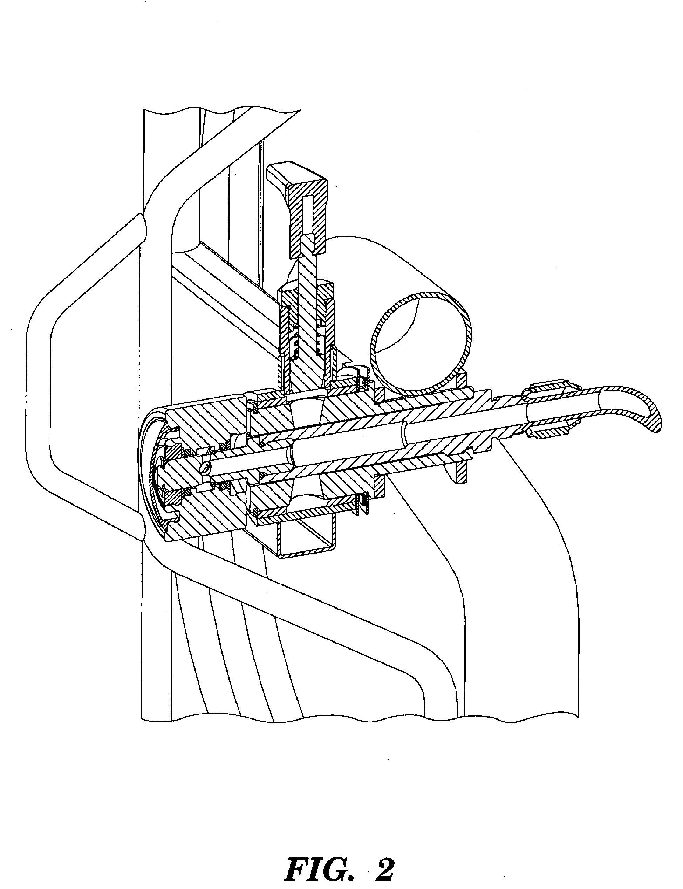

Figure 2 shows an isometric cross-section of the swivel in relation to the hose reel.

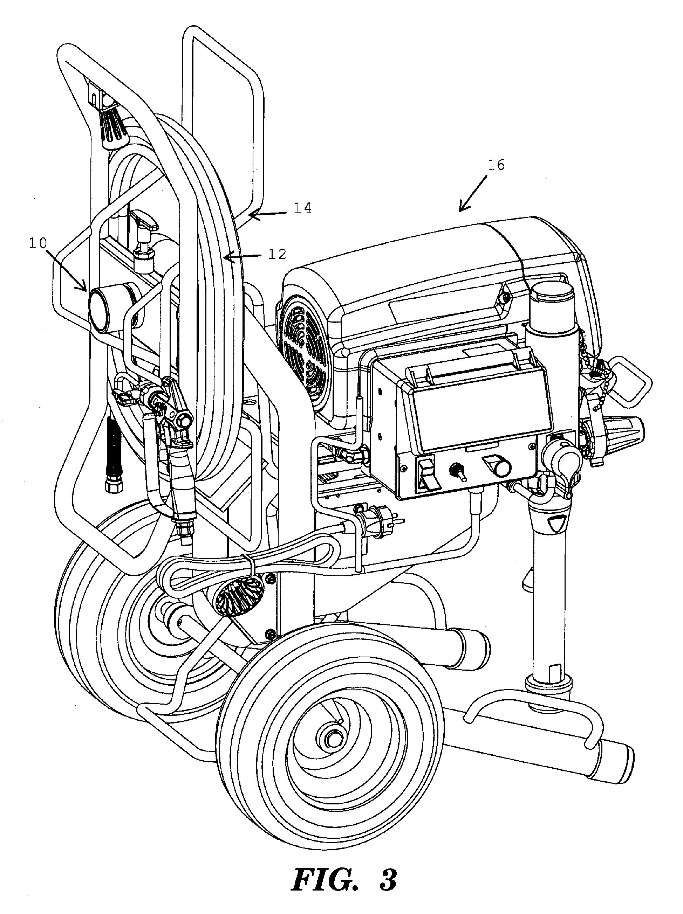

Figure 3 shows the hose reel and swivel in relation to a paint sprayer.

### BEST MODE FOR CARRYING OUT THE INVENTION

The hose reel swivel 10 allows the user to coil a hose 12 with a reel 14 and store on a paint sprayer 16. This eliminates having to coil a hose 12 by hand, which reduces the time to coil the hose 12, eliminates hose kinks and stores a coiled hose more compactly and securely.

The swivel 10 consists of the following: (1) a hardened stainless steel shaft 20 that fluid flows through and the swivel housing 22 rotates around; (2) a carbon steel with zinc plated swivel housing 22 contains the seals 24 and an outlet fitting 26; (3) a UHMWPE with fluorocarbon o-ring energized seals 24; (4) threaded brass retainers 28 support the seals 24 and provide a bushing against the shaft 20; and (5) a retaining clip 30 on end of the shaft 20.

The hose reel swivel 18 uses o-ring energized ultra high molecular weight polyethylene (UHMWPE) seals 24 that last longer than prior art o-ring swivels. It also has larger flow passages 32 for high viscosity fluids. It also has less parts than V-packing swivels.

## Claims

1. A fluid swivel comprising:
a shaft (20) having fluid passages (32) therein;
a swivel housing (22) rotatable about said shaft;
an o-ring seal (24) located between said shaft and said swivel housing;
an outlet fitting (26) comprising an outlet fluid passage (32); and
a retainer (28) supporting said seal;
**characterized in that** the fluid swivel comprises:
a plurality of said seals (24), which are UHMWPE with fluorocarbon o-ring energized seals, and
a plurality of said retainers (28), which also provide a bushing against said shaft;
wherein one of said seals (24) and its associated retainer (28) is disposed on one side of the outlet fluid passage (32) and another of said seals (24) and its associated retainer (28) is disposed on the other side of the outlet fluid passage (32).

2. The swivel of claim 1 wherein said fluid passages are sized to flow high viscosity fluids.

## Patentansprüche

1. Fluiddrehlager, das Folgendes umfasst:
eine Welle (20) mit darin ausgebildeten Fluiddurchgängen (32);
ein Drehlagergehäuse (22), das um die Welle herum drehbar ist;
eine O-Ring-Dichtung (24), die zwischen der Welle und dem Drehlagergehäuse angeordnet ist;
einen Auslassanschluss (26), der einen Auslassfluiddurchgang (32) umfasst; und
einen Halter (28), der die Dichtung stützt;
**dadurch gekennzeichnet, dass** das Fluiddrehlager Folgendes umfasst:
mehrere der Dichtungen (24), die aus UHMWPE bestehen und mit Fluorkohlenstoff-O-Ring-beaufschlagte Dichtungen sind, und
mehrere der Halters (28), die außerdem eine Buchse gegen die Welle bilden,
wobei eine der Dichtungen (24) und ihr zugehöriger Halter (28) auf einer Seite des Auslassfluiddurchgangs (32) angeordnet sind und eine weitere der Dichtungen (24) und ihr zugehöriger Halter (28) auf der anderen Seite des Auslassfluiddurchgangs (32) angeordnet sind.

2. Drehlager nach Anspruch 1, wobei die Fluiddurchgänge so bemessen sind, dass Fluide mit hoher Viskosität hindurchfließen können.

## Revendications

1. Raccord de fluide à pivot comprenant :
un arbre (20) comportant à l'intérieur des passages de fluide (32) ;
un logement de pivot (22) rotatif autour dudit arbre ;
un joint torique d'étanchéité (24) situé entre ledit arbre et ledit logement de pivot ;
un raccord de sortie (26) comprenant un passage de fluide de sortie (32) ; et
un dispositif de retenue (28) soutenant ledit joint d'étanchéité ;
**caractérisé en ce que** le raccord de fluide à pivot comprend :
une pluralité desdits joints d'étanchéité (24), qui sont des joints toriques d'étanchéité UHMWPE avec du fluorocarbure ;
une pluralité desdits dispositifs de retenue (28), qui fournissent aussi un coussinet de palier contre ledit arbre ;
dans lequel un desdits joints d'étanchéité (24) et son dispositif de retenue associé (28) est disposé sur un côté du passage de fluide de sortie (32) et un autre desdits joints d'étanchéité (24) et son dispositif de retenue associé (28) est disposé sur l'autre côté du passage de fluide de sortie (32).

2. Raccord à pivot selon la revendication 1, dans lequel lesdits passages de fluide sont dimensionnés afin de laisser s'écouler des fluides à haute viscosité.
